(19) Europäisches Patentamt
European Patent Office
Office européen des brevets

(11) **EP 4 579 178 A1**

(12) **EUROPEAN PATENT APPLICATION**
published in accordance with Art. 153(4) EPC

(43) Date of publication:
**02.07.2025 Bulletin 2025/27**

(21) Application number: **23872513.9**

(22) Date of filing: **28.09.2023**

(51) International Patent Classification (IPC):
***G01C 9/06*** *(2006.01)* ***G01C 15/00*** *(2006.01)*

(52) Cooperative Patent Classification (CPC):
**G01C 9/06; G01C 15/00**

(86) International application number:
**PCT/JP2023/035367**

(87) International publication number:
**WO 2024/071291 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022157332**

(71) Applicant: **TOPCON CORPORATION**
**Tokyo 174-8580 (JP)**

(72) Inventors:
- **KIKUCHI Takeshi**
  **Tokyo 174-8580 (JP)**
- **TAKANO Yuji**
  **Tokyo 174-8580 (JP)**

(74) Representative: **Schmitt-Nilson Schraud Waibel Wohlfrom**
**Patentanwälte Partnerschaft mbB**
**Pelkovenstraße 143**
**80992 München (DE)**

# (54) LEVELING SYSTEM AND LASER OPTICAL RECEIVER

(57) A leveling system (1) includes a rotating laser device (10) configured to horizontally emit laser light (B) and a laser light receiver (20) configured to receive the laser light, in which the laser light receiver includes a vertical light-receiving tube (23), a horizontal light-receiving tube (24) and an arithmetic processing unit (31), the arithmetic processing unit specifies a collision position (235) of the laser light, calculates a side on which the collision position is located with a center position of a length of the light receiving tubes as a boundary and a difference distance of the collision position from the center position, detects a front-rear inclination (θ) of the light receiver from a difference distance (Dv) of the vertical light-receiving tube, and detects a left-right inclination (δ) of the light receiver from a difference distance (Dh) of the horizontal light-receiving tube.

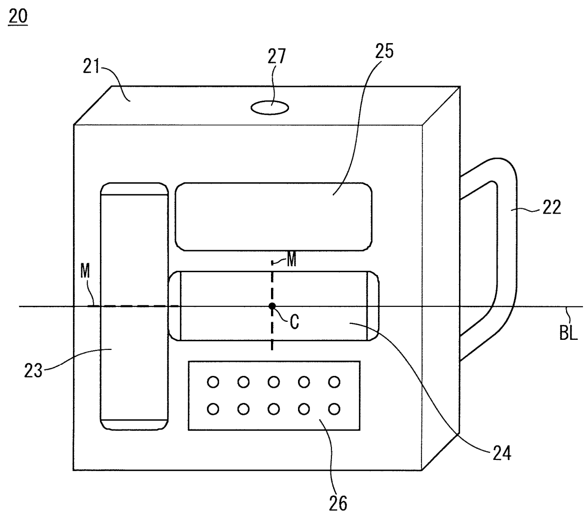

FIG. 2

EP 4 579 178 A1

## Description

Technical Field

The present invention relates to a leveling system and a laser light receiver for receiving and leveling horizontal laser light from a rotating laser device.

Background Art

Surveying work in various constructions such as building, civil engineering, and interior construction uses a rotating laser device and a laser light receiver for leveling. The rotating laser device includes a rotating head installed at a measurement reference point and including a laser light source, and horizontally turns laser light at a reference height. The laser light receiver detects a collision position of the laser light in a detection body provided with a light receiving sensor, and detects a position in a height direction (vertical direction) of the laser light receiver with respect to the laser light. Patent Literature 1 discloses a laser light receiver in which a plurality of photodiodes are provided around a vertical axis as a light receiving sensor, the light receiving sensor is configured to be movable in a vertical direction, and laser light is always received at a center position in a height direction (vertical direction) of the light receiving sensor.

Citation List

Patent Literature

Patent Literature 1: Japanese Published Unexamined Patent Application No. 2020-169921

Summary of Invention

Technical Problem

However, the laser light receiver in Patent Literature 1 needs to include a tilt sensor in order to prevent an error caused by an inclination of the laser light receiver.

The present invention has been made to solve such a problem, and an object thereof is to detect an inclination of a laser light receiver without using a tilt sensor.

Solution to Problem

In order to solve the above problem, according to a first aspect of the present invention, there is provided a leveling system including a rotating laser device configured to horizontally emit laser light at a predetermined height H from a measurement reference point; and a laser light receiver configured to receive the laser light, in which the laser light receiver includes, as light receiving sensors, a vertical light-receiving tube and a horizontal light-receiving tube each including a columnar light guide, light receiving units disposed at both ends of the light guide, and a light coupling layer configured to divide the laser light toward both the ends of the light guide, and an arithmetic processing unit connected to the light receiving units, and the arithmetic processing unit specifies a collision position of the laser light from each of light reception signals of the light receiving units, and calculates a side on which the collision position is located with a center position of a length of the light guide as a boundary and a difference distance of the collision position from the center position, and detects a front-rear inclination $\theta$ of the light receiver from a difference distance Dv of the vertical light-receiving tube, and detects a left-right inclination $\delta$ of the light receiver from a difference distance Dh of the horizontal light-receiving tube.

According to a leveling system of a second aspect, in the first aspect, preferably, the arithmetic processing unit calculates the front-rear inclination $\theta$ from Numerical Formula 1 and calculates the left-right inclination $\delta$ from Numerical Formula 2.

According to a leveling system of a third aspect, in the first aspect, preferably, the arithmetic processing unit reads and obtains the front-rear inclination $\theta$ corresponding to the difference distance Dv detected by the vertical light-receiving tube and reads and obtains the left-right inclination $\delta$ corresponding to the difference distance Dh detected by the horizontal light-receiving tube from a front-rear inclination detection table storing a correspondence relationship between the difference distance Dv and the front-rear inclination $\theta$ and a horizontal inclination detection table storing a correspondence relationship between the difference distance Dh and the left-right inclination $\delta$.

According to a leveling system of a fourth aspect, in any one of the first to third aspects, the vertical light-receiving tube and the horizontal light-receiving tube are preferably disposed in a T shape such that a central axis of the horizontal light-receiving tube is aligned with the center position of the vertical light-receiving tube and a light receiver center is aligned with the center position of the horizontal light-receiving tube.

According to a leveling system of a fifth aspect, in any one of the first to third aspects, preferably, the vertical light-receiving tube includes two of a first vertical light-receiving tube and a second vertical light-receiving tube, and the horizontal light-receiving tube includes one horizontal light-receiving tube, and the first vertical light-receiving tube, the second vertical light-receiving tube, and the horizontal light-receiving tube are disposed in an H shape such that a central axis of the horizontal light-receiving tube is aligned with the center position of each of the first vertical light-receiving tube and the second vertical light-receiving tube, and a light receiver center is aligned with the center position of the horizontal light-receiving tube.

According to a leveling system of a sixth aspect, in any one of the first to third aspects, preferably, in the laser light receiver, the horizontal light-receiving tube includes two of a first horizontal light-receiving tube and a second horizontal light-receiving tube, and the vertical light-receiving tube includes one vertical light-receiving tube, and the first horizontal light-receiving tube, the second horizontal light-receiving tube, and the vertical light-receiving tube are disposed in a C shape or an I shape such that an intersection between an extension from the center position of each of the first horizontal light-receiving tube and the second horizontal light-receiving tube and an extension from the center position of the vertical light-receiving tube is aligned with a light receiver center, and the rotating laser device emits laser light at the height H, and laser light at a height H+d and laser light at a height H-d deviating upward and downward from the laser light at the height H by a separation distance d between the center position of each of the first horizontal light-receiving tube and the second horizontal light-receiving tube and a central axis of the horizontal light-receiving tube, and the first horizontal light-receiving tube calculates the difference distance Dh with the laser light at the height H+d, and the second horizontal light-receiving tube calculates the difference distance Dh with the laser light at the height H-d.

According to a leveling system of a seventh aspect, in any one of the first to third aspects, preferably, in the laser light receiver, the vertical light-receiving tube includes two of a first vertical light-receiving tube and a second vertical light-receiving tube, the horizontal light-receiving tube includes two of a first horizontal light-receiving tube and a second horizontal light-receiving tube, the first vertical light-receiving tube, the second vertical light-receiving tube, the first horizontal light-receiving tube, and the second horizontal light-receiving tube are disposed in a rectangular shape such that an intersection between an extension from the center position of each of the first vertical light-receiving tube and the second vertical light-receiving tube and an extension from the center position of each of the first horizontal light-receiving tube and the second horizontal light-receiving tube is aligned with a light receiver center, and the rotating laser device emits laser light at the height H, and laser light at a height H+d and laser light at a height H-d deviating upward and downward from the laser light at the height H by a separation distance d between the center position of each of the first horizontal light-receiving tube and the second horizontal light-receiving tube and a central axis of the horizontal light-receiving tube, and the first horizontal light-receiving tube calculates the difference distance Dh with the laser light at the height H+d, and the second horizontal light-receiving tube calculates the difference distance Dh with the laser light at the height H-d.

According to an eighth aspect, there is preferably provided a laser light receiver that receives laser light horizontally emitted at a predetermined height H from a measurement reference point, the laser light receiver including a vertical light-receiving tube and a horizontal light-receiving tube, as light receiving sensors, each including a columnar light guide, light receiving units disposed at both ends of the light guide, and a light coupling layer configured to divide the laser light toward both the ends of the light guide; and an arithmetic processing unit connected to the light receiving units, in which the arithmetic processing unit specifies a collision position of the laser light from each of light reception signals of the light receiving units, and calculates a side on which the collision position is located with a center position of a length of the light guide as a boundary and a difference distance of the collision position from the center position, and detects a front-rear inclination θ of the light receiver from a difference distance Dv of the vertical light-receiving tube, and detects a left-right inclination δ of the light receiver from a difference distance Dh of the horizontal light-receiving tube.

## Brief Description of Drawings

FIG. 1 is an external perspective view of a leveling system according to a first embodiment.
FIG. 2 is a front perspective view of a light receiver of the same leveling system.
FIG. 3 is a diagram for describing a light receiving sensor of the light receiver of the same leveling system.
FIG. 4A is a diagram for describing detection of a front-rear inclination performed by the light receiver of the same leveling system.
FIG. 4B is a diagram for describing detection of a left-right inclination performed by the light receiver of the same leveling system.
FIG. 5A is a diagram for describing calculation of a front-rear inclination performed by the light receiver of the same leveling system.
FIG. 5B is a diagram for describing calculation of a left-right inclination performed by the light receiver of the same leveling system.
FIG. 6 is a configuration block diagram of the same leveling system.
FIG. 7 is a front perspective view of a light receiver of a leveling system according to a second embodiment.
FIG. 8 is a front perspective view of a light receiver of a leveling system according to a third embodiment.
FIGS. 9(1) and 9(2) illustrate configuration examples of a rotating laser device according to the third embodiment.
FIG. 10 is a front perspective view of a light receiver of a leveling system according to a fourth embodiment.
FIG. 11 is a configuration block diagram of a modification example of the leveling system of the embodiments.

FIG. 12 illustrates an example of an inclination detection table according to a modification example.
Advantageous Effects of Invention

According to the present invention, a laser light receiver for leveling can detect an inclination of the laser light receiver.

Description of Embodiments

Next, a preferred embodiment of the present invention will be described with reference to the drawings. In the following description of the embodiment, the same type of configuration is denoted by the same name, and redundant description will be omitted as appropriate.

First Embodiment

FIG. 1 is an external perspective view of a leveling system 1 according to a first embodiment, and FIG. 2 is a front perspective view of a light receiver 20. The leveling system 1 includes a rotating laser device 10 and a laser light receiver (hereinafter, simply referred to as light receiver) 20.

The rotating laser device 10 includes a rotating head 11 including a laser light source 14 such as a light emitting diode (LED), a semiconductor laser (LD), or a super luminescent diode (SLED). The rotating head 11 emits laser light B serving as pulsed laser light. The laser light B has an intensity modulated to a predetermined frequency. The rotating laser device 10 is erected at one measurement reference point RP on the ground via a leveling stand, and rotates the rotating head 11 to rotate laser light B to be turned on a horizontal reference plane 12 having a height H used for leveling from the measurement reference point RP. The rotating laser device 10 includes a communication unit 13 that will be described later, and transmits information regarding the height H to the light receiver 20.

As illustrated in FIG. 2, the light receiver 20 includes a case 21, a handle 22, a vertical light-receiving tube 23, a horizontal light-receiving tube 24, a display unit 25, an operation unit 26, and a light emitting indicator 27. The vertical light-receiving tube 23, the horizontal light-receiving tube 24, the display unit 25, and the operation unit 26 are disposed on a front surface of the case 21. The light emitting indicator 27 is disposed at a position, such as an upper surface of the case 21, where an operator can easily visually recognize the light emitting indicator 27. A pair of left and right handles 22 are disposed on a rear surface of the case 21 (in FIG. 2, the left handle in a front view is invisible). The vertical light-receiving tube 23 and the horizontal light-receiving tube 24 are light receiving sensors of the light receiver 20. As illustrated in FIG. 1, the light receiver 20 is fixed at a certain height, for example, immediately above a measurement point X1. The light receiver 20 uses a known fixture to be supported by a support member P such as a pole or a leveling rod to receive the laser light B at the height. Alternatively, an operator W may support the light receiver 20 at a certain height, for example, immediately above a measurement point X2 while using the light emitting indicator 27 and/or a buzzer 32 that will be described later. The light receiver 20 receives the laser light B at the height.

The vertical light-receiving tube 23 is disposed such that an axial direction thereof is the vertical direction, and the horizontal light-receiving tube 24 is disposed such that an axial direction thereof is the horizontal direction, and since the vertical light-receiving tube 23 and the horizontal light-receiving tube 24 have the same configuration, a configuration of the light receiving sensor will be described by using the vertical light-receiving tube 23. FIG. 3 is a diagram for describing the light receiving sensor (vertical light-receiving tube 23) of the light receiver 20, and is a diagram illustrating a side surface of the vertical light-receiving tube 23. In FIG. 3, the left side is the front surface of the case 21 and the side that receives the laser light B.

The vertical light-receiving tube 23 includes a columnar light guide 231, a light receiving unit 232 disposed at one end portion of the light guide 231, and a light receiving unit 233 disposed at the other end portion. The light receiving units 232 and 233 are photodiodes, avalanche photodiodes (APD), or equivalent photoelectric conversion elements. Each of light reception signals detected by the light receiving units 232 and 233 is processed by an arithmetic processing unit 31 that will be described later. A material of the light guide 231 is not limited as long as the laser light B is guided in the light guide 231, and is, for example, transparent glass or quartz, or resin such as acryl or polycarbonate. The light guide 231 is a cylinder or an elliptical column having a prescribed length L in the axial direction or has a columnar shape capable of guiding light through total reflection. The columnar shape also has the prescribed length L in the axial direction. A light coupling layer 234 is formed on the light guide 231 (see a cross-section view). The light coupling layer 234 couples the laser light B to the light guide 231 using principles of diffraction, refraction, scattering, reflection, dispersion, and/or fluorescence of the light (the laser light is incident into the light guide without being reflected outward of the light guide). The light coupling layer 234 is formed by, for example, applying a coating material in which fluorescent particles are dispersed in a solution to the surface of the light guide 231 or providing a resin layer containing fluorescent particles on the surface of the light guide 231.

As illustrated in FIG. 3, when the laser light B collides with the light guide 231, at a collision position 235, the laser light B is coupled into the light guide 231 by the light coupling layer 234 and is divided into laser light B1 directed to one light receiving unit 232 and laser light B2 directed to the other light receiving unit 233 in the opposite direction. When the collision position 235 is the center position M in the axial direction of the light guide 231, a distance L1 by which the laser light B1 is guided and a distance L2 by which the laser light B2 is guided are the same, so that waveforms of light reception signals of the light receiving units 232 and 233 coincide with each other. However, when the collision position 235 deviates from the center position M of the light guide 231, the distances L1 and L2 by which the laser light B1 and the laser light B2 are guided are different, so that waveforms of the light reception signals of the light receiving units 232 and 233 deviate from each other. For example, in FIG. 3, since the collision position 235 is above the center position M of the light guide 231 and the distance L1 is shorter than the distance L2, the light reception signal in the light receiving unit 233 delays with respect to the light reception signal in the light receiving unit 232. The arithmetic processing unit 31 calculates the distances L1 and L2 from a time difference or a phase difference between the light reception signals, the prescribed length L, and a light propagation speed of the light guide 231 to specify the collision position 235. In addition, the arithmetic processing unit 31 detects on which side the collision position 235 is located with the center position M as a boundary. The arithmetic processing unit 31 also calculates a difference distance D of the collision position 235 from the center position M based on the prescribed length L and the distance L1 or L2. For example, in FIG. 3, D is obtained from L/2-L1 or L2-L/2.

Here, as illustrated in FIG. 2, the light receiver 20 has the vertical light-receiving tube 23 and the horizontal light-receiving tube 24 that are disposed in a "T" shape such that the central axis of the horizontal light-receiving tube 24 is aligned with a center position M of a length L of the vertical light-receiving tube 23, and a light receiver center C is aligned with a center position M of a length L of the horizontal light-receiving tube 24. When the laser light B does not collide with the light receiver center C, the light emitting indicator 27 blinks and/or the buzzer 32 that will be described later emits a signal sound, and the operator can align rotating laser device 10 with the light receiver 20. When the operator performs alignment such that the laser light B collides with the light receiver center C, the laser light B passes on a line BL in FIG. 2.

After the above alignment, as illustrated in FIG. 4A, the light receiver 20 being inclined by θ in the front-rear direction causes the collision position 235 in the vertical light-receiving tube 23 to deviate to a position higher than the center position M and also causes the light reception signals in the light receiving units 232 and 233 to deviate from each other. Thus, the arithmetic processing unit 31 detects a difference distance Dv. In addition, as illustrated in FIG. 4B, the light receiver 20 being inclined to the left by δ1 causes the collision position 235 in the horizontal light-receiving tube 24 to deviate to the right from the center position M and delays the light reception signal in a light receiving unit 242 with respect to the light reception signal in a light receiving unit 243. Thus, the arithmetic processing unit 31 detects a difference distance Dh. As illustrated in FIG. 4B, the light receiver 20 being inclined to the right by δ2 causes the collision position 235 in the horizontal light-receiving tube 24 to deviate to the left from the center position M and delays the light reception signal in the light receiving unit 243 with respect to the light reception signal in the light receiving unit 242. Thus, the arithmetic processing unit 31 detects a difference distance Dh.

Thus, the light receiver 20 being inclined by θ in the front-rear direction enables the inclination θ of the light receiver 20 in the front or rear direction to be calculated from a relationship illustrated in FIG. 5A. When the light receiver 20 is inclined by θ rearward, the laser light B is orthogonally incident on (the front side surface of) the vertical light-receiving tube 23 at a prescribed height H through alignment. Thereafter, when the light receiver 20 has no front-rear inclination, the collision position 235 of the laser light B becomes the center position M. However, when the light receiver 20 has a front-rear inclination, the collision position 235 of the laser light B becomes higher than the center position M, and the arithmetic processing unit 31 detects the difference distance Dv. The difference distance Dv becomes longer as the inclination θ increases, and the inclination θ and a value of the difference distance Dv are in a one-to-one correspondence. Here, the inclination θ is obtained according to Numerical Formula 1 by using the difference distance Dv on the basis of a right triangle formed by the state (1) in which the light receiver 20 is upright, the state (2) in which the light receiver 20 is inclined rearward, and the laser light B.

[Numerical Formula 1]

$$\theta = \cos^{-1}\left(\frac{H}{H + Dv}\right)$$

The light receiver 20 being inclined by δ to the left and right enables the left or right inclination δ of the light receiver 20 to be calculated from a relationship illustrated in FIG. 5B. When the light receiver 20 is inclined to the right by δ, the laser light B is orthogonally incident on (the front side surface of) the horizontal light-receiving tube 24 at the specified height H through alignment. Thereafter, when the light receiver 20 has no right inclination, the collision position 235 of the laser light B becomes the center position M. However, when the light receiver 20 has a right inclination, the collision position 235 of the laser light B becomes higher than the center position M, and the arithmetic processing unit 31 detects the difference distance Dh. The difference distance Dh becomes longer as the inclination δ increases, and the inclination δ and a value of the difference distance Dh are in a one-to-one correspondence. Here, the inclination δ is obtained according to Numerical Formula 2 by using the difference distance Dh on the basis of an isosceles triangle formed by the state (3) in which the light receiver 20 is upright, the state (4) in which the light receiver 20 is inclined to the right, and the difference distance Dh. As illustrated in FIG. 4B, when the difference distance Dh deviates to the left, the left-right inclination is obtained by specifying the right inclination δ2, and when the difference distance Dh deviates to the right, the left-right inclination is obtained by specifying the left inclination δ1.

[Numerical Formula 2]

$$\delta = 2\sin^{-1}\left(\frac{Dh/2}{H}\right)$$

FIG. 6 is a configuration block diagram of the leveling system 1 based on the above description. As described above, the rotating laser device 10 includes the rotating head 11 that emits the laser light B and the communication unit 13. The light receiver 20 includes the arithmetic processing unit 31, the buzzer 32, a communication unit 33, a storage unit 34, the light receiving units 232 and 233 (of the vertical light-receiving tube), the light receiving units 242 and 243 (of the horizontal light-receiving tube), the display unit 25, the operation unit 26, and the light emitting indicator 27.

The display unit 25 is a liquid crystal or organic EL display, and displays alignment and inclination detection that will be described later. The operation unit 26 is a button or a switch, and can perform operations at the time of alignment and inclination detection. The light receiving units 232 and 233 (of the vertical light-receiving tube) and the light receiving units 242 and 243 (of the horizontal light-receiving tube) are as described above, and the respective receiving units transmit a light reception signal to the arithmetic processing unit 31. The communication unit 33 can wirelessly communicate with the communication unit 13 of the rotating laser device 10, and receives information regarding the height H of the laser light B from the communication unit 13. For example, Bluetooth (registered trademark), various wireless LAN standards, infrared communication, a mobile phone line, or other wireless lines may be used for the communication.

The arithmetic processing unit 31 includes an integrated circuit in which at least a central processing unit (CPU) and a memory (such as a random access memory (RAM) or a read only memory (ROM)) are mounted on an integrated circuit, a set of integrated circuits, a microcontroller, and a microprocessor.

The arithmetic processing unit 31 includes functional units such as an alignment unit 311, a front-rear inclination detection unit 312, and a left-right inclination detection unit 313. Each functional unit is configured by an electronic circuit such as a CPU, an application specific integrated circuit (ASIC), and a programmable logic device (PLD) such as a field programmable gate array (FPGA).

The alignment unit 311 aligns the rotating laser device 10 and the light receiver 20, that is, aligns the laser light B and the light receiver center C (FIG. 2) at the start of leveling. The operator keeps the light receiver 20 upright and horizontal by using, for example, a horizontal bubble tube (not illustrated) as a guide, and gives an instruction for alignment from the operation unit 26. When the laser light B does not collide with the light receiver center C, the alignment unit 311 displays a difference (a difference in the vertical direction can be detected by the vertical light-receiving tube 23, and a difference in the horizontal direction can be detected by the horizontal light-receiving tube 24) from the light receiver center C on the display unit 25 by using, for example, an arrow, and notifies the operator of the difference by blinking the light emitting indicator 27 and/ or emitting a signal sound of the buzzer 32.

When the light receiver 20 is inclined in the front-rear direction after the alignment and the vertical light-receiving tube 23 detects the difference distance Dv, the front-rear inclination detection unit 312 calculates the front-rear inclination θ from the above Numerical Formula 1, and displays the front or rear inclination and an angle of the inclination θ on the display unit 25. When the front-rear inclination detection unit 312 has detected the front-rear inclination θ, the front-rear inclination detection unit 312 notifies the operator of the front-rear inclination θ by blinking the light emitting indicator 27 and/or emitting a signal sound of the buzzer 32.

When the light receiver 20 is inclined in the left-right direction after the alignment and the horizontal light-receiving tube 24 detects the difference distance Dh, the left-right inclination detection unit 313 calculates the left-right inclination δ from the above Numerical Formula 2, and displays an angle of the inclination δ on the display unit 25 together with whether the inclination is the left inclination or the right inclination. When the left-right inclination detection unit 313 has detected the left-right inclination δ, the left-right inclination detection unit 313 notifies the operator of the left-right inclination δ by blinking the light emitting indicator 27 and/or emitting a signal sound of the buzzer 32.

The arithmetic processing unit 31 (functional units 311, 312, and 313) controls the buzzer 32 and the light emitting indicator 27, and the buzzer 32 and the light emitting indicator 27 operate at the time of alignment and at the time of inclination detection. A signal sound, a lighting color, or a blinking pattern of the buzzer 32 and the light emitting indicator 27 is preferably changed according to operations of the functional units 311, 312, and 313.

The storage unit 34 includes, for example, a RAM and a ROM as a main storage device, and a hard disk drive (HDD) as an auxiliary storage device. The storage unit 34 stores each processing program performed by the arithmetic processing unit 31.

As described above, according to the leveling system 1 of the present embodiment, when the light receiver 20 is inclined after the alignment, since the light receiver 20 includes the light receiving sensors including the vertical light-receiving tube 23 and the horizontal light-receiving tube 24, the vertical light-receiving tube 23 detects a front-rear inclination, and the horizontal light-receiving tube 24 detects a left-right inclination and notifies the operator of the detected inclinations. In particular, the light receiver 20 can calculate numerical values of its own front-rear inclination $\theta$ and left-right inclination $\delta$, and can notify the operator with specific numerical values via the display unit 25.

Second Embodiment

FIG. 7 is a front perspective view of a light receiver 20 of a leveling system 1 according to a second embodiment. The light receiver 20 of the present embodiment includes two vertical light-receiving tubes 23 of the first embodiment. The left vertical light-receiving tube in a front view is a first vertical light-receiving tube 23L, and the right vertical light-receiving tube is a second vertical light-receiving tube 23R. The light receiving sensors of the light receiver 20 are disposed in an "H" shape such that the central axis of the horizontal light-receiving tube 24 is aligned with the center position M of the length L of each of the first vertical light-receiving tube 23L and the second vertical light-receiving tube 23R, and the light receiver center C is aligned with the center position M of the length L of the horizontal light-receiving tube 24. The display unit 25 and the operation unit 26 are disposed in these margins.

In the present embodiment, when the light receiver 20 is inclined in the front-rear direction after alignment, the first vertical light-receiving tube 23L and the second vertical light-receiving tube 23R detect the difference distance Dv, and matching (including not only exact matching, but also a numerical value within a predetermined allowable range) occurs between the front-rear inclinations $\theta$ of the first vertical light-receiving tube 23L and the second vertical light-receiving tube 23R, the front-rear inclination detection unit 312 notifies the operator of the matching by using the display unit 25, the buzzer 32, and the light emitting indicator 27. According to the present embodiment, since the operator performs matching by using the two vertical light-receiving tubes 23, the detection accuracy of a front-rear inclination is improved.

Third Embodiment

FIG. 8 is a front perspective view of a light receiver 20 of a leveling system 1 according to a third embodiment. The light receiver 20 according to the present embodiment includes two horizontal light-receiving tubes 24 of the first embodiment. In a front view, the upper horizontal light-receiving tube is a first horizontal light-receiving tube 24U, and the lower horizontal light-receiving tube is a second horizontal light-receiving tube 24D. The light receiving sensors of the light receiver 20 are disposed in a "C" shape or an "I" shape such that an intersection between the extension from the center position M of the length L of each of the first horizontal light-receiving tube 24U and the second horizontal light-receiving tube 24D and the extension from the center position M of the length L of the vertical light-receiving tube 23 is aligned with the light receiver center C. A separation distance d between the center position M of the vertical light-receiving tube 23 and the central axis of each of the horizontal light-receiving tubes 24U and 24D is measured and ascertained in advance. The display unit 25 and the operation unit 26 are disposed in these margins.

FIGS. 9(1) and 9(2) illustrate configuration examples of a rotating laser device 10 according to the third embodiment. The rotating laser device 10 according to the present embodiment emits laser light B at a height H, laser light B' at a height H+d, and laser light B" at a height H-d. For example, as exemplified in FIG. 9(1), the rotating laser device 10 includes a rotating mirror 15 disposed in the vicinity of an optical axis of a laser light source 14 and fixed mirrors 16 and 17 disposed above and below the rotating mirror 15, and regularly changes a rotation angle of the rotating mirror 15 to generate the laser light B directly emitted at the height H, the laser light B' reflected by the rotating mirror 15 and emitted from the upper fixed mirror 16 at the height H+d, and the laser light B" reflected by the rotating mirror 15 and emitted from the lower fixed mirror 17 at the height H-d. Alternatively, as exemplified in FIG. 9(2), the rotating laser device 10 includes auxiliary laser light sources 14' and 14" disposed above and below a main laser light source 14 by a distance d, and emits laser light B at a height H from the main laser light source 14, laser light B' at a height H+d from the auxiliary laser light source 14', and the laser light B" at a height H-d from the auxiliary laser light source 14". The present embodiment is not limited to these examples, and the rotating laser device 10 of the present embodiment can move an emission height of the laser light B up and down by the separation distance d from the height H by using a combination of known optical elements such as a rotating mirror, a beam splitter, and a prism.

In the present embodiment, the rotating laser device 10 emits the laser light B at the height H, the laser light B' at the height H+d, and the laser light B" of the laser light B at the height H-d on the basis of a predetermined rule. After the alignment, the front-rear inclination detection unit 312 detects the front-rear inclination $\theta$ on the basis of the laser light B at the height H. After the alignment, the left-right inclination detection unit 313 detects the left-right inclination $\delta$ on the basis of the laser light B' at the height H+d and the laser light B" at the height H-d. When the light receiver 20 is inclined in the left-right direction, the first horizontal light-receiving tube 24U detects the difference distance Dh with the laser light B' at the height H+d and the second horizontal light-receiving tube 24D detects the difference distance Dh with the laser light B" at the height H-d, and matching (including not only exact matching, but also a numerical value within a predetermined allowable range) occurs between the left-right inclinations δ of the first horizontal light-receiving tube 24U and the second horizontal light-receiving tube 24D, the left-right inclination detection unit 313 notifies the operator of the matching by using the display unit 25, the buzzer 32, and the light emitting indicator 27. According to the present embodiment, since the operator performs matching by using the two horizontal light-receiving tubes 24, the detection accuracy of a left-right inclination is improved.

Fourth Embodiment

FIG. 10 is a front perspective view of a light receiver 20 of a leveling system 1 according to a fourth embodiment. The light receiver 20 of the present embodiment includes the first vertical light-receiving tube 23L and the second vertical light-receiving tube 23R of the second embodiment, and the first horizontal light-receiving tube 24U and the second horizontal light-receiving tube 24D of the third embodiment, and includes the light receiving sensors disposed in a "rectangular" shape. The display unit 25 and the operation unit 26 are disposed in these margins. Similarly to the third embodiment, the rotating laser device 10 according to the present embodiment can also move an emission height of the laser light B up and down by the separation distance d from the height H.

In the present embodiment, similarly to the second embodiment, when the front-rear inclinations θ of the first vertical light-receiving tube 23L and the second vertical light-receiving tube 23R match each other, and when the left-right inclinations δ of the first horizontal light-receiving tube 24U and the second horizontal light-receiving tube 24D match each other, the operator is notified of the matching by using the display unit 25, the buzzer 32, and the light emitting indicator 27. According to the present embodiment, since the two vertical light-receiving tubes 23 and the two horizontal light-receiving tubes 24 are aligned, the detection accuracy of both the front-rear inclination and the horizontal inclination is improved.

Modification Examples

Preferred modification examples of the first to fourth embodiments will be described. FIG. 11 is a configuration block diagram of a modification example. The arithmetic processing unit 31 of the leveling system 1 may include a front-rear inclination table creation unit 314 and a left-right inclination table creation unit 315. The front-rear inclination θ and the left-right inclination δ depend on the height H of the laser light B as expressed by Numerical Formulas 1 and 2, respectively. Thus, when information regarding the height H is received from the rotating laser device 10, the front-rear inclination table creation unit 314 creates a front-rear inclination detection table 341 storing a correspondence relationship between the difference distance Dv and the front-rear inclination θ on the basis of Numerical Formula 1, and stores the front-rear inclination detection table 341 in the storage unit 34. Similarly, the left-right inclination table creation unit 315 creates a left-right inclination detection table 342 storing a correspondence relationship between the difference distance Dh and the left-right inclination δ on the basis of Numerical Formula 2, and stores the left-right inclination detection table 342 in the storage unit 34. FIG. 12 exemplifies the front-rear inclination detection table 341 and the left-right inclination detection table 342 when a resolution is in units of 0.5 mm. The front-rear inclination detection table 341 stores the inclination angle θ corresponding to each difference distance Dv, in which the center position M of the vertical light-receiving tube 23 is 0 [mm], the difference distance Dv detected on the light receiving unit 232 side from the center position M is positive, and the difference distance Dv detected on the light receiving unit 233 side from the center position M is negative. The left-right inclination detection table 342 stores the inclination angle δ corresponding to each difference distance Dh, in which the center position M of the horizontal light-receiving tube 24 is 0 [mm], the difference distance Dh detected on the light receiving unit 242 side from the center position M is positive, the difference distance Dh detected on the light receiving unit 243 side from the center position M is negative.

According to the present modification example, since the correspondence relationships with the front-rear inclination and the left-right inclination are obtained in advance, the front-rear inclination detection unit 312 and the left-right inclination detection unit 313 may read and obtain the front-rear inclination θ and the left-right inclination δ corresponding to the difference distance Dv and the difference distance Dh from the detection tables 341 and 342, which is efficient. When the height H to be used is determined in advance, creating the detection tables 341 and 342 in advance with another personal computer and storing the detection tables 341 and 342 in the storage unit 34 are also effective.

Although the preferred embodiments and modifications of the present invention have been described above, the above is an example of the present invention, and these can be combined on the basis of knowledge of those skilled in the art, and such forms are also included in the scope of the present invention.

Reference Signs List

| | |
|---|---|
| 1 | Leveling system |
| 10 | Rotating laser device |
| 11 | Rotating head |
| 12 | Horizontal reference plane |

| | |
|---|---|
| 13 | Communication unit |
| 14 | Laser light source |
| 20 | Laser light receiver |
| 21 | Case |
| 22 | Handle |
| 23 | Vertical light-receiving tube |
| 231 | Light guide |
| 232 | Light receiving unit |
| 233 | Light receiving unit |
| 234 | Light coupling layer |
| 235 | Collision position |
| 24 | Horizontal light-receiving tube |
| 242 | Light receiving unit |
| 243 | Light receiving unit |
| 25 | Display unit |
| 26 | Operation unit |
| 27 | Light emitting indicator |
| 31 | Arithmetic processing unit |
| 311 | Alignment unit |
| 312 | Front-rear inclination detection unit |
| 313 | Left-right inclination detection unit |
| 314 | Front-rear inclination table creation unit |
| 315 | Left-right inclination table creation unit |
| 32 | Buzzer |
| 33 | Communication unit |
| 34 | Storage unit |
| 341 | Front-rear inclination detection table |
| 342 | Left-right inclination detection table |

## Claims

**1.** A leveling system comprising:

a rotating laser device configured to horizontally emit laser light at a predetermined height H from a measurement reference point; and
a laser light receiver configured to receive the laser light, wherein

the laser light receiver includes, as light receiving sensors, a vertical light-receiving tube and a horizontal light-receiving tube each including a columnar light guide, light receiving units disposed at both ends of the light guide, and a light coupling layer configured to divide the laser light toward both the ends of the light guide, and an arithmetic processing unit connected to the light receiving units, and
the arithmetic processing unit
specifies a collision position of the laser light from each of light reception signals of the light receiving units, and calculates a side on which the collision position is located with a center position of a length of the light guide as a boundary and a difference distance of the collision position from the center position, and
detects a front-rear inclination θ of the light receiver from a difference distance Dv of the vertical light-receiving tube, and detects a left-right inclination δ of the light receiver from a difference distance Dh of the horizontal light-receiving tube.

**2.** The leveling system according to claim 1, wherein the arithmetic processing unit calculates the front-rear inclination θ from Numerical Formula 1 and calculates the left-right inclination δ from Numerical Formula 2.

[Numerical Formula 1]

$$\theta = \cos^{-1}\left(\frac{H}{H + Dv}\right)$$

[Numerical Formula 2]

$$\delta = 2\sin^{-1}\left(\frac{Dh/2}{H}\right)$$

**3.** The leveling system according to claim 1, wherein the arithmetic processing unit reads and obtains the front-rear inclination θ corresponding to the difference distance Dv detected by the vertical light-receiving tube and reads and obtains the left-right inclination δ corresponding to the difference distance Dh detected by the horizontal light-receiving tube from a front-rear inclination detection table storing a correspondence relationship between the difference distance Dv and the front-rear inclination θ and a horizontal inclination detection table storing a correspondence relationship between the difference distance Dh and the left-right inclination δ.

**4.** The leveling system according to claim 1, wherein the vertical light-receiving tube and the horizontal light-receiving tube are disposed in a T shape such that a central axis of the horizontal light-receiving tube is aligned with the center position of the vertical light-receiving tube and a light receiver center is aligned with the center position of the horizontal light-receiving tube.

**5.** The leveling system according to claim 1, wherein the vertical light-receiving tube includes two of a first vertical light-receiving tube and a second vertical light-receiving tube, and the horizontal light-receiving tube includes one horizontal light-receiving tube, and the first vertical light-receiving tube, the second vertical light-receiving tube, and the horizontal light-receiving tube are disposed in an H shape such that a central axis of the horizontal light-receiving tube is aligned with the center position of each of the first vertical light-receiving tube and the second vertical light-receiving tube, and a light receiver center is aligned with the center position of the horizontal light-receiving tube.

**6.** The leveling system according to claim 1, wherein

in the laser light receiver, the horizontal light-receiving tube includes two of a first horizontal light-receiving tube and a second horizontal light-receiving tube, and the vertical light-receiving tube includes one vertical light-receiving tube, and the first horizontal light-receiving tube, the second horizontal light-receiving tube, and the vertical light-receiving tube are disposed in a C shape or an I shape such that an intersection between an extension from the center position of each of the first horizontal light-receiving tube and the second horizontal light-receiving tube and an extension from the center position of the vertical light-receiving tube is aligned with a light receiver center, and

the rotating laser device emits laser light at the height H, and laser light at a height H+d and laser light at a height H-d deviating upward and downward from the laser light at the height H by a separation distance d between the center position of each of the first horizontal light-receiving tube and the second horizontal light-receiving tube and a central axis of the horizontal light-receiving tube, and

the first horizontal light-receiving tube calculates the difference distance Dh with the laser light at the height H+d, and the second horizontal light-receiving tube calculates the difference distance Dh with the laser light at the height H-d.

**7.** The leveling system according to claim 1, wherein

in the laser light receiver, the vertical light-receiving tube includes two of a first vertical light-receiving tube and a second vertical light-receiving tube, the horizontal light-receiving tube includes two of a first horizontal light-receiving tube and a second horizontal light-receiving tube, the first vertical light-receiving tube, the second vertical light-receiving tube, the first horizontal light-receiving tube, and the second horizontal light-receiving tube are disposed in a rectangular shape such that an intersection between an extension from the center position of each of the first vertical light-receiving tube and the second vertical light-receiving tube and an extension from the center position of each of the first horizontal light-receiving tube and the second horizontal light-receiving tube is aligned with a light receiver center, and

the rotating laser device emits laser light at the height H, and laser light at a height H+d and laser light at a height H-d deviating upward and downward from the laser light at the height H by a separation distance d between the center position of each of the first horizontal light-receiving tube and the second horizontal light-receiving tube and a central axis of the horizontal light-receiving tube, and

the first horizontal light-receiving tube calculates the difference distance Dh with the laser light at the height H+d, and the second horizontal light-receiving tube calculates the difference distance Dh with the laser light at the height H-d.

**8.** A laser light receiver that receives laser light horizontally emitted at a predetermined height H from a measurement reference point, the laser light receiver comprising:

a vertical light-receiving tube and a horizontal light-receiving tube, as light receiving sensors, each including a columnar light guide, light receiving units disposed at both ends of the light guide, and a light coupling layer configured to divide the laser light toward both the ends of the light guide; and

an arithmetic processing unit connected to the light receiving units, wherein

the arithmetic processing unit

specifies a collision position of the laser light from each of light reception signals of the light receiving units, and calculates a side on which the collision position is located with a center position of a length of the light guide as a boundary and a difference distance of the collision position from the center position, and

detects a front-rear inclination $\theta$ of the light receiver from a difference distance Dv of the vertical light-receiving tube, and detects a left-right inclination $\delta$ of the light receiver from a difference distance Dh of the horizontal light-receiving tube.

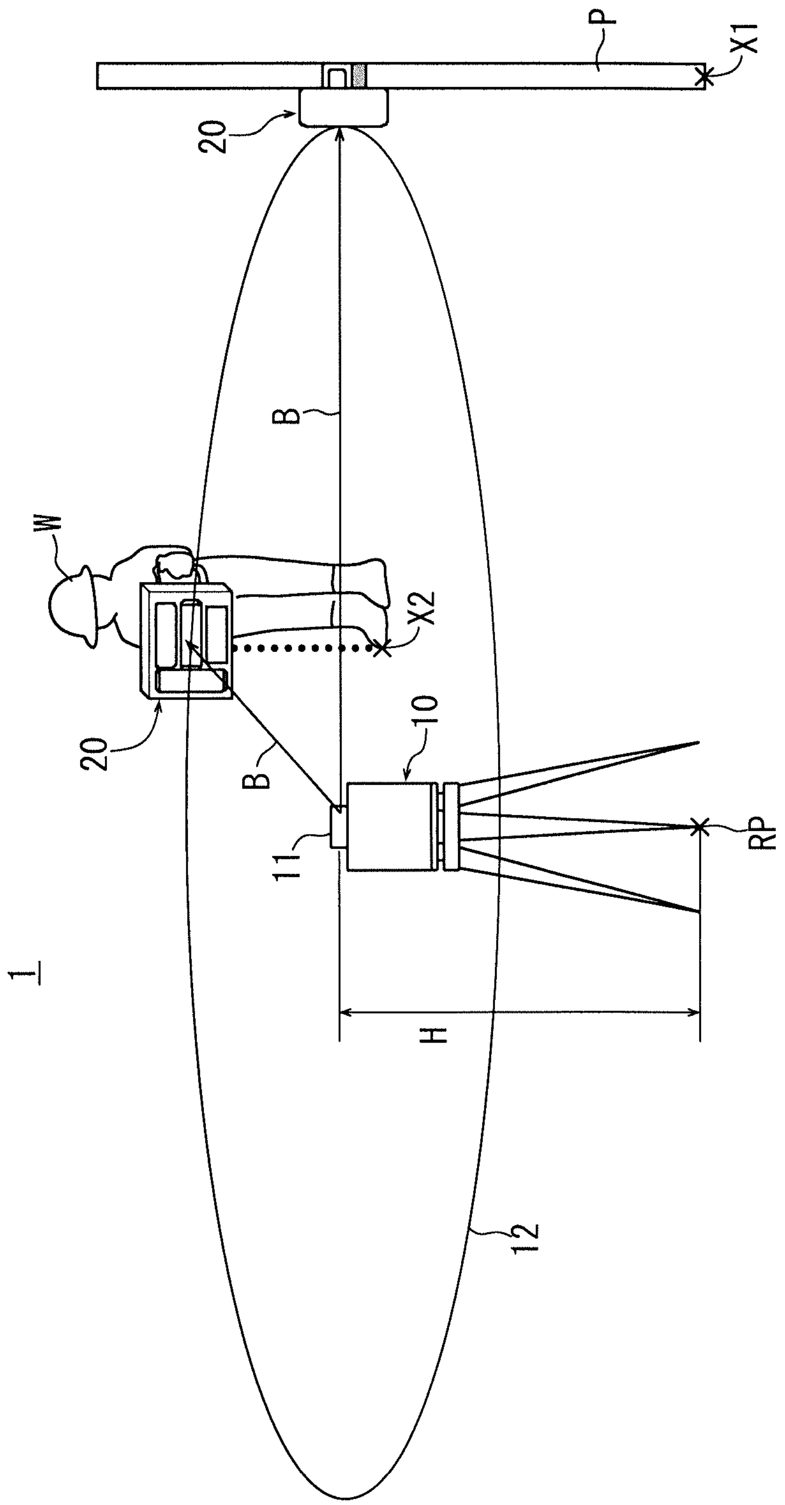


FIG. 1

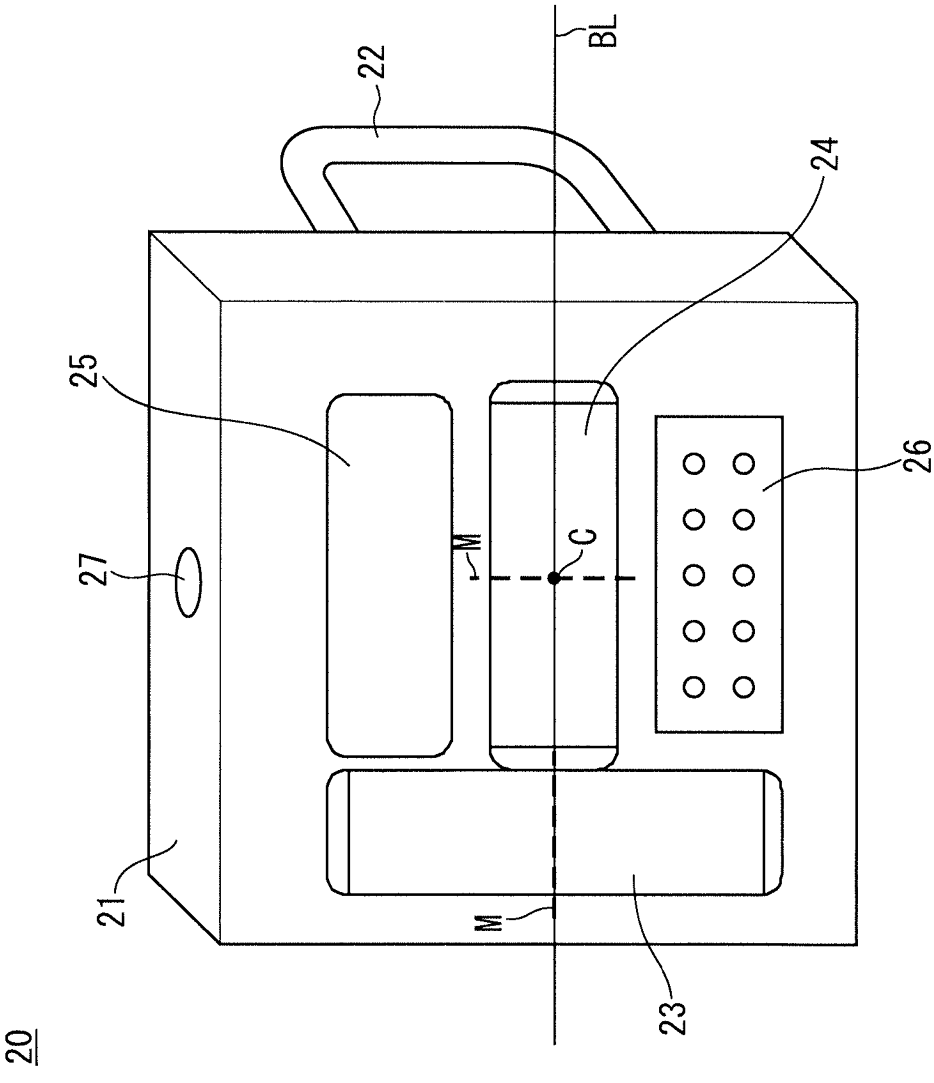


FIG. 2

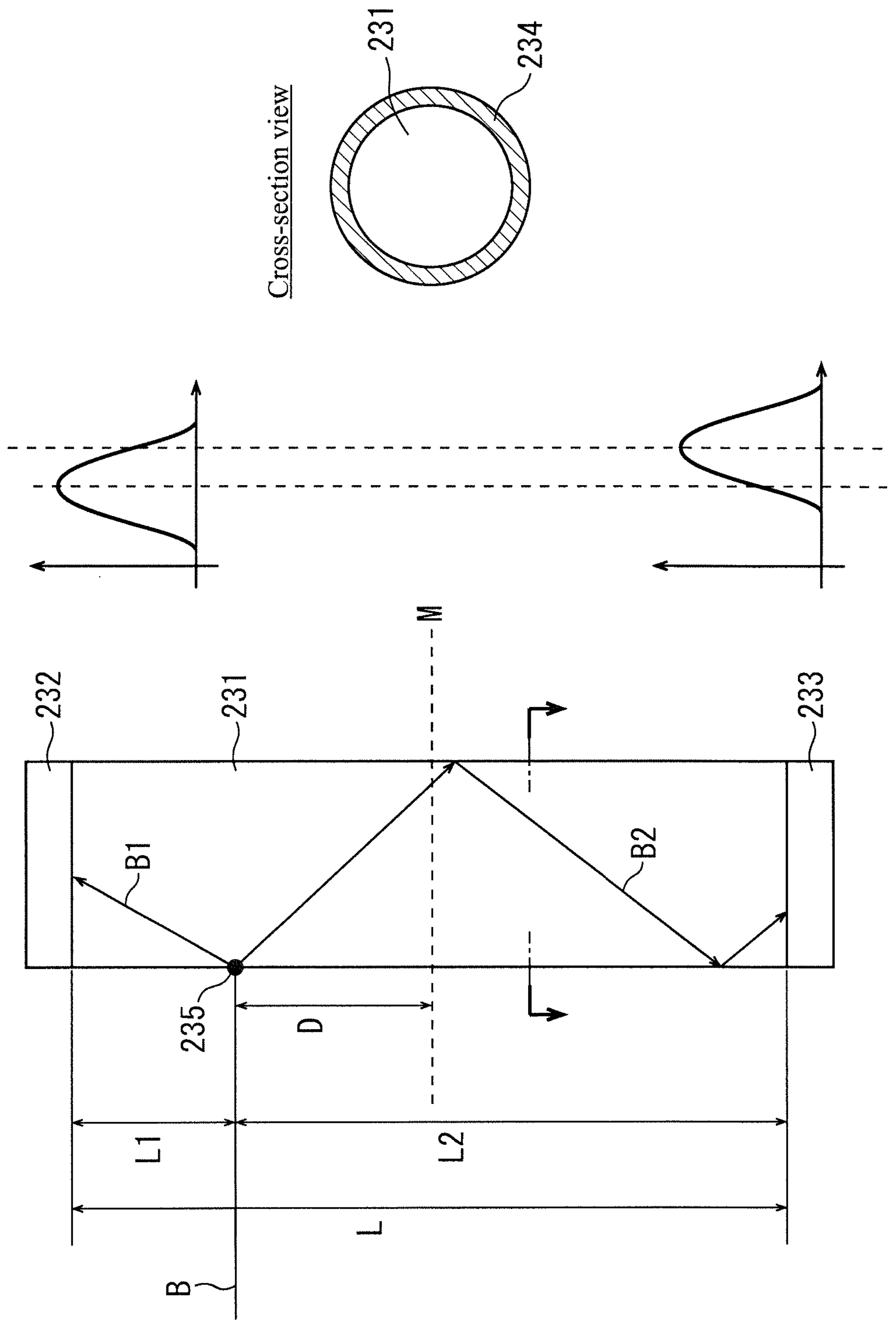


FIG. 3

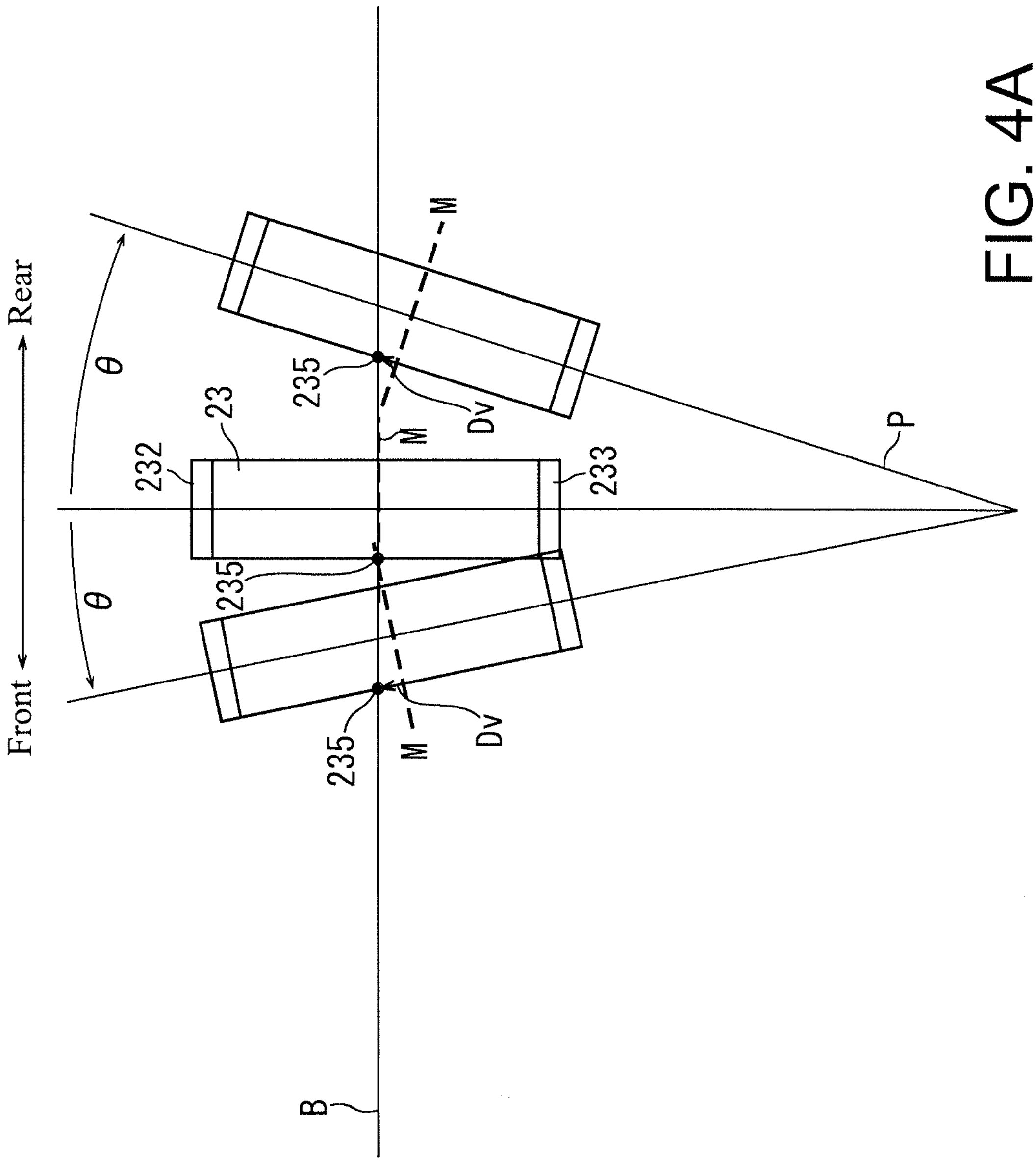


FIG. 4A

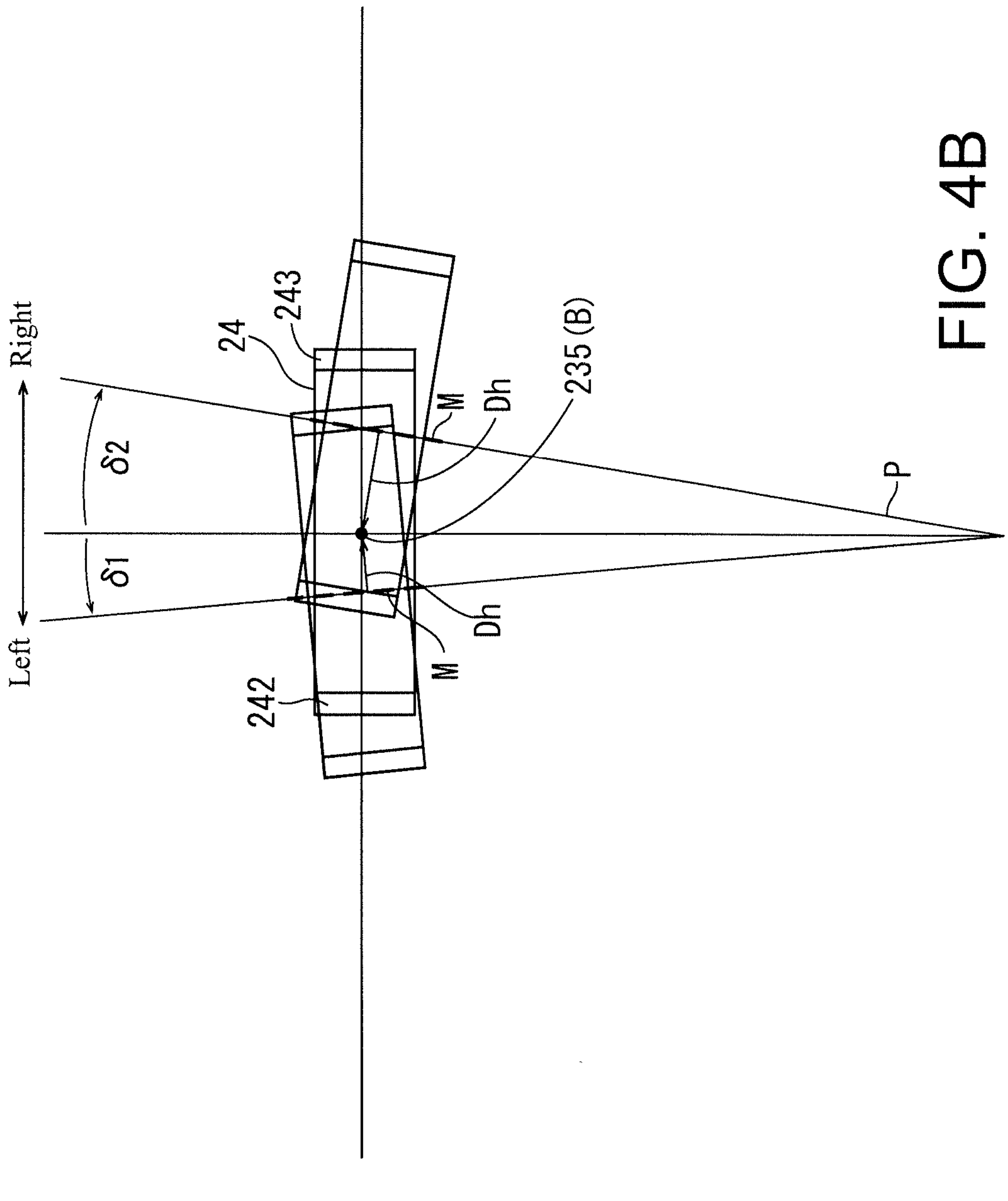


FIG. 4B

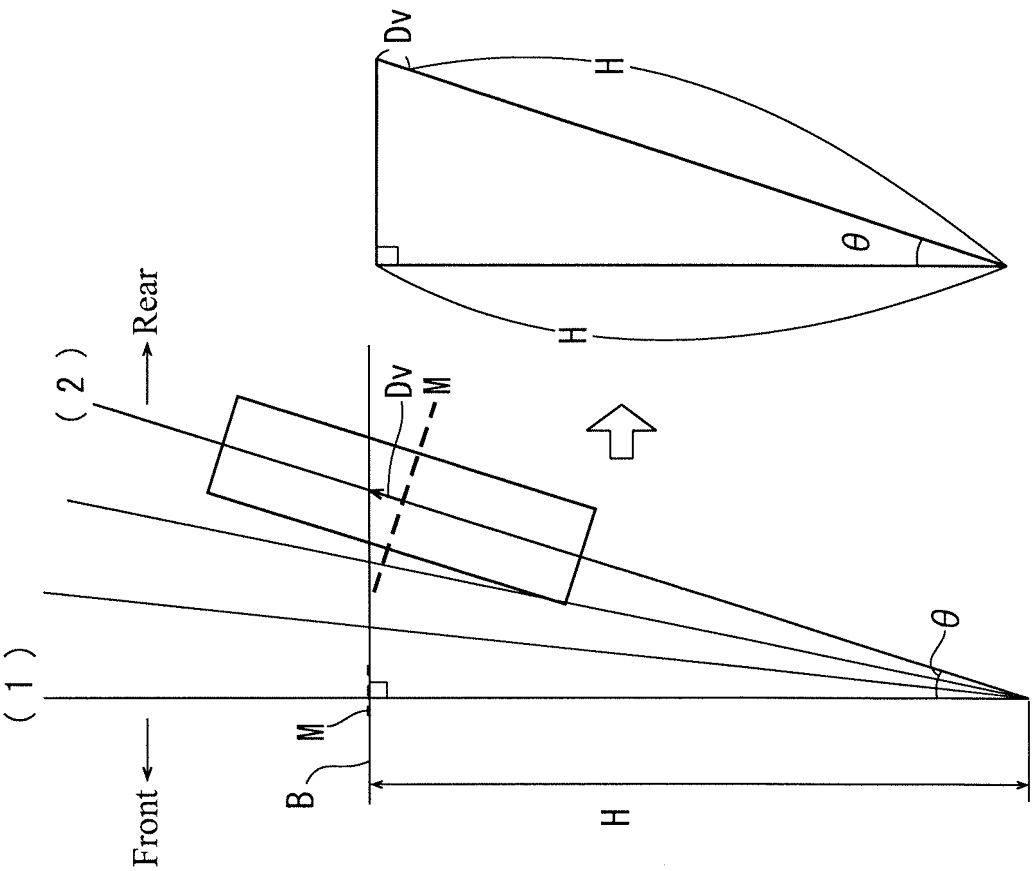


FIG. 5A

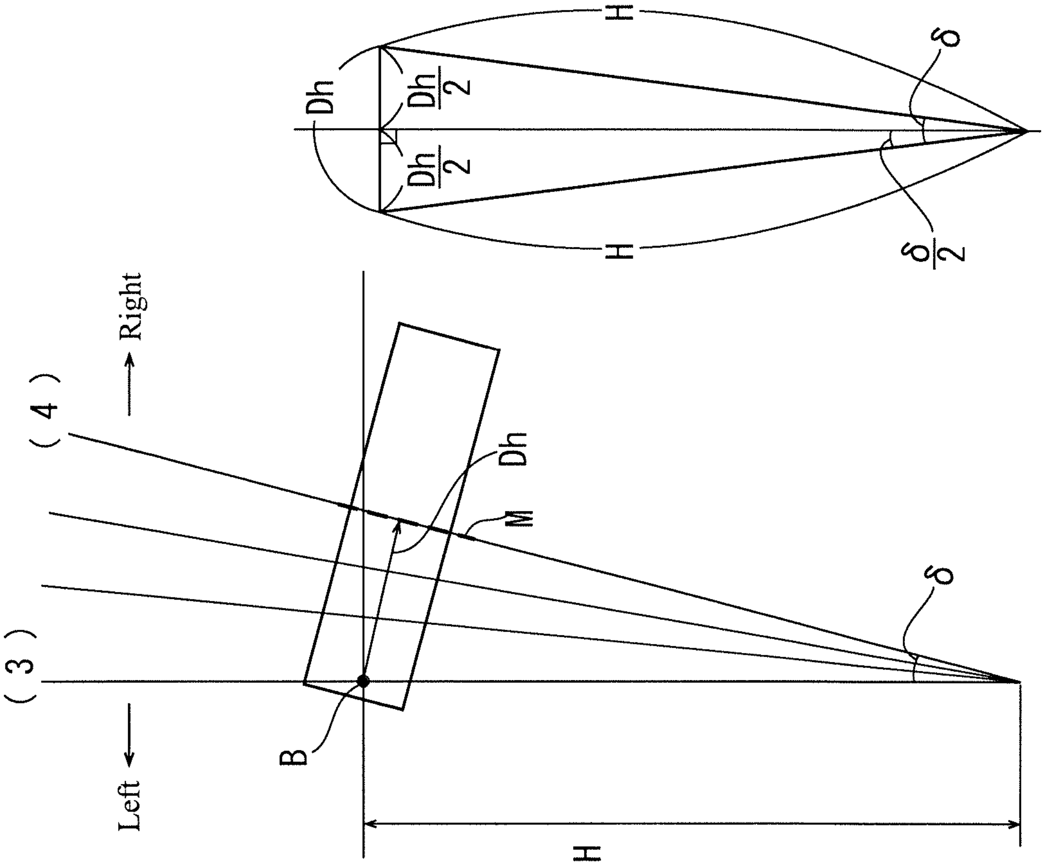


FIG. 5B

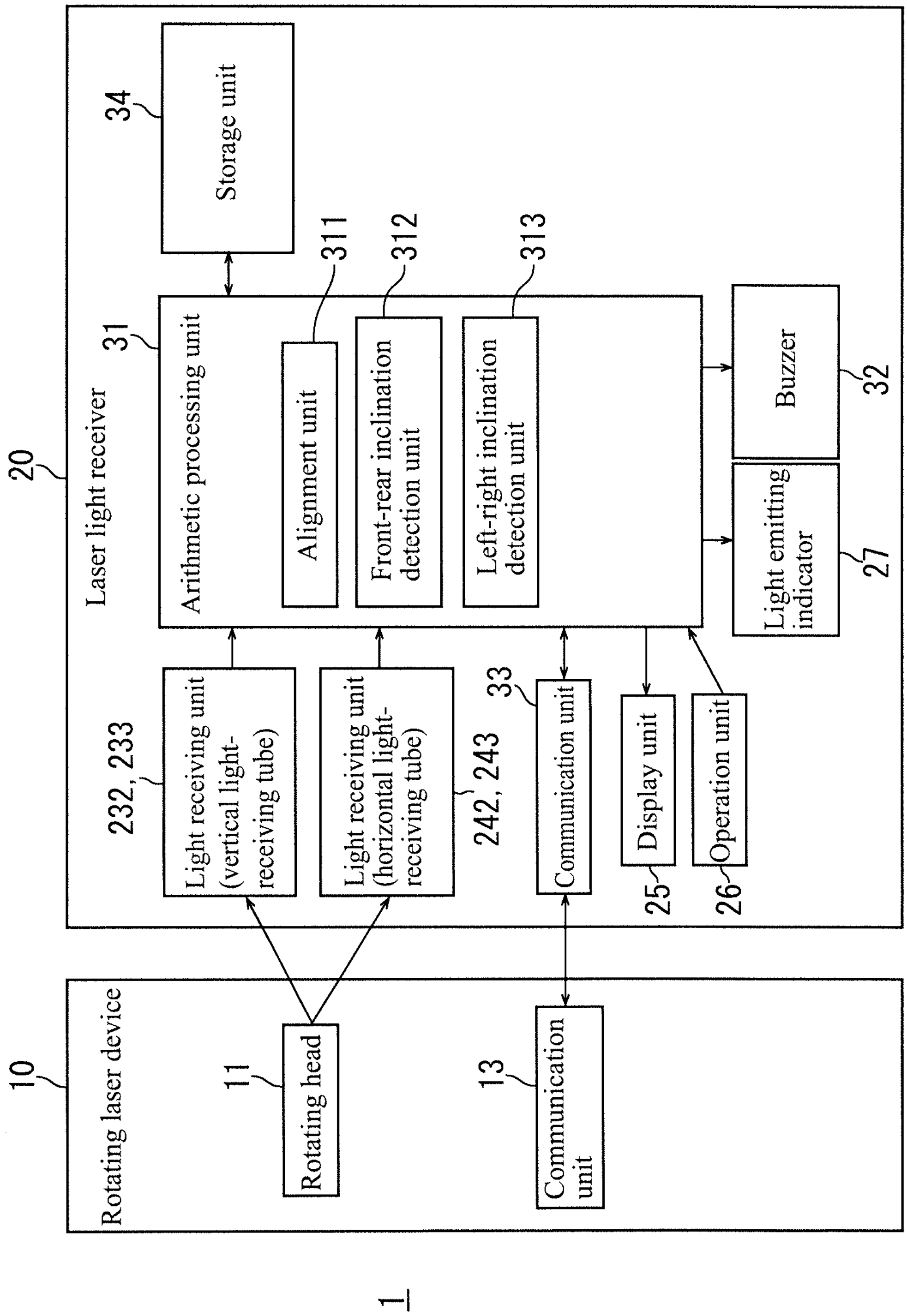
1
10
Rotating laser device
11
Rotating head
13
Communication unit
20
Laser light receiver
232, 233
Light receiving unit (vertical light-receiving tube)
242, 243
Light receiving unit (horizontal light-receiving tube)
33
Communication unit
25
Display unit
26
Operation unit
31
Arithmetic processing unit
311
Alignment unit
312
Front-rear inclination detection unit
313
Left-right inclination detection unit
34
Storage unit
32
Buzzer
27
Light emitting indicator

FIG. 6

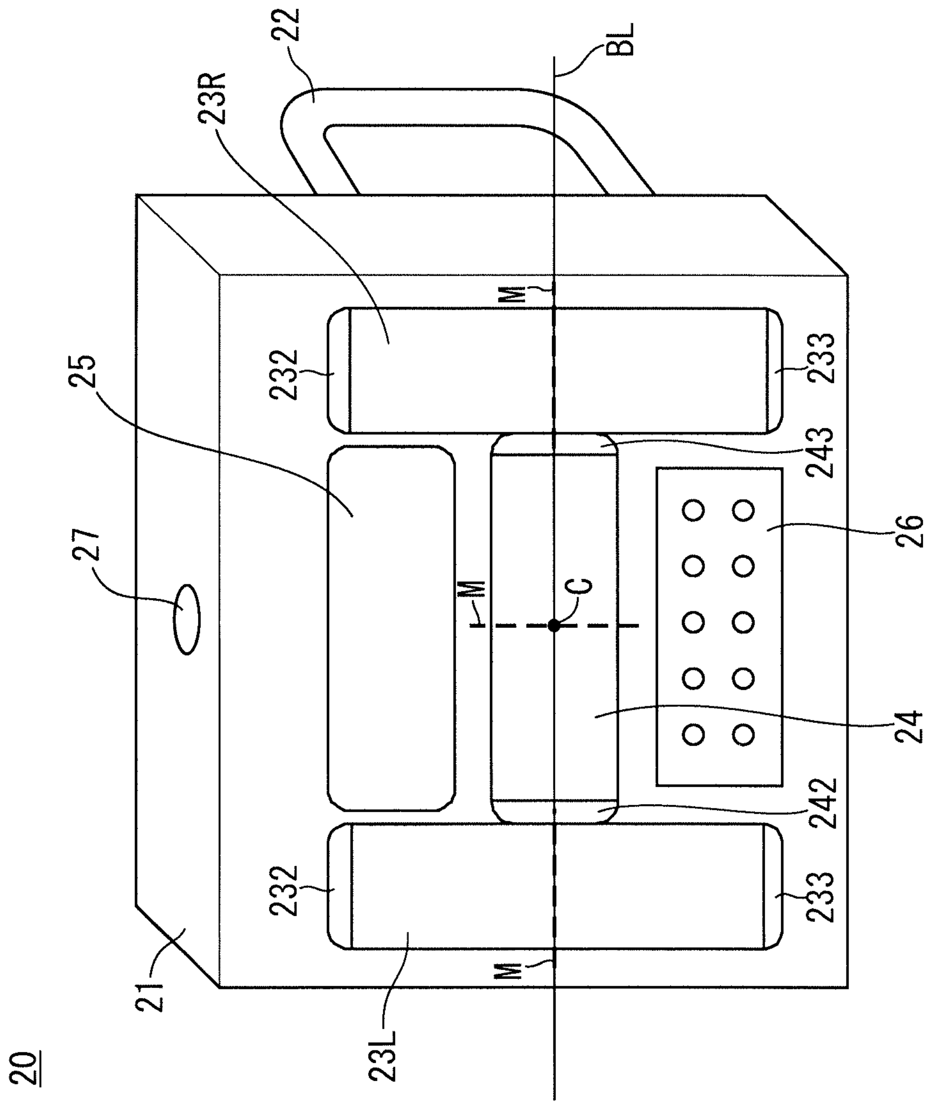


FIG. 7

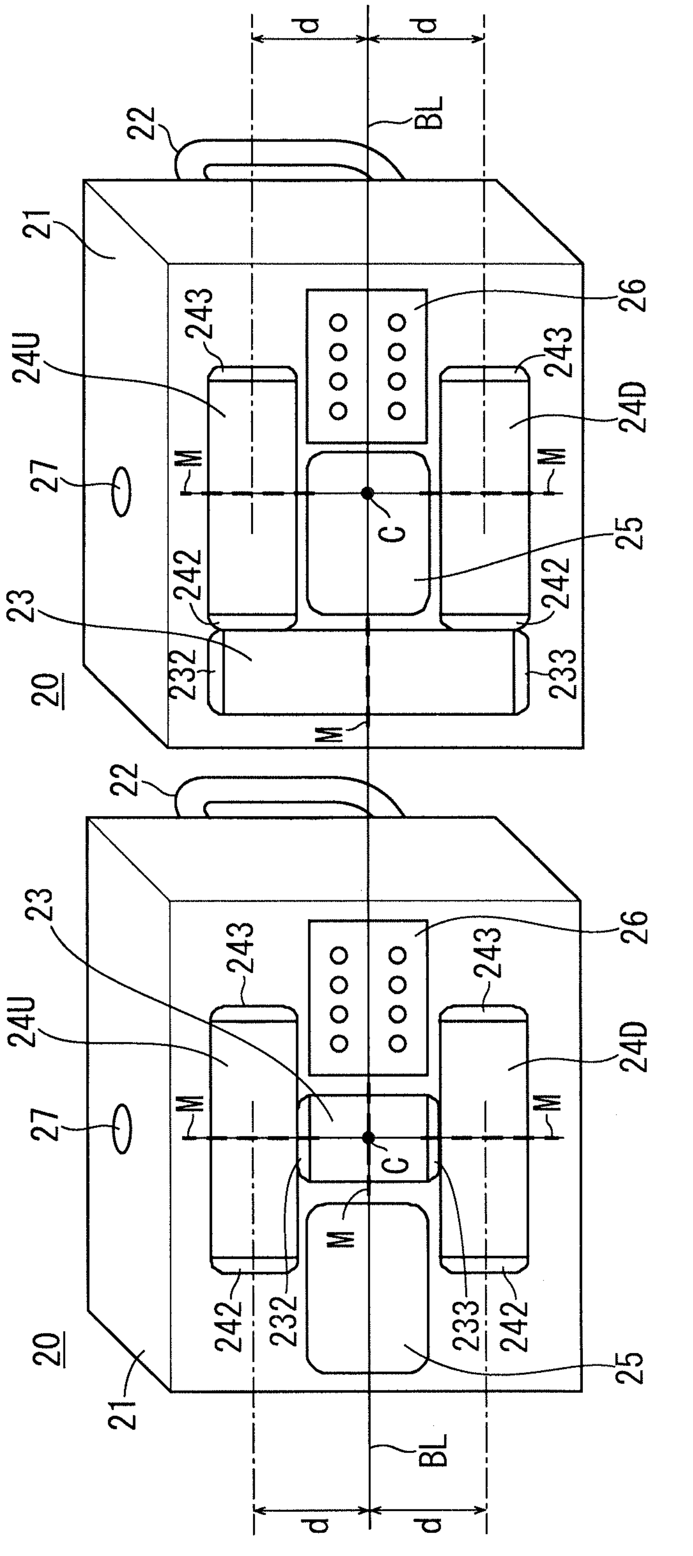


FIG. 8

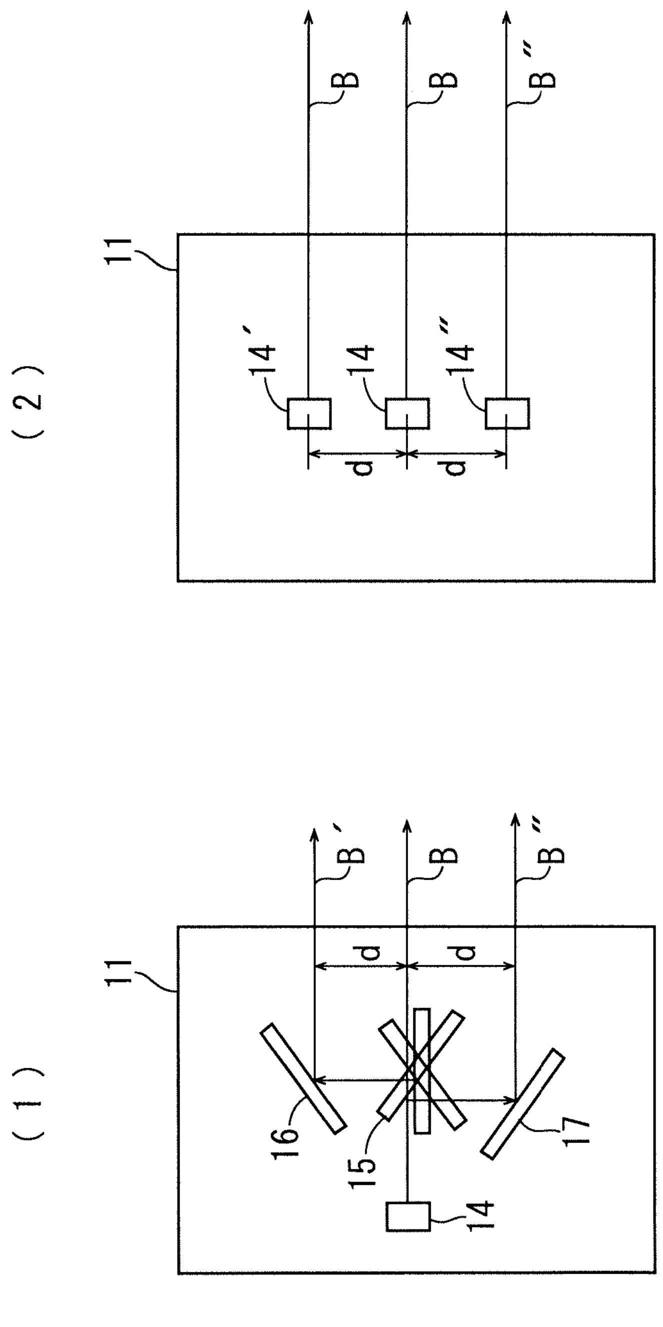


FIG. 9

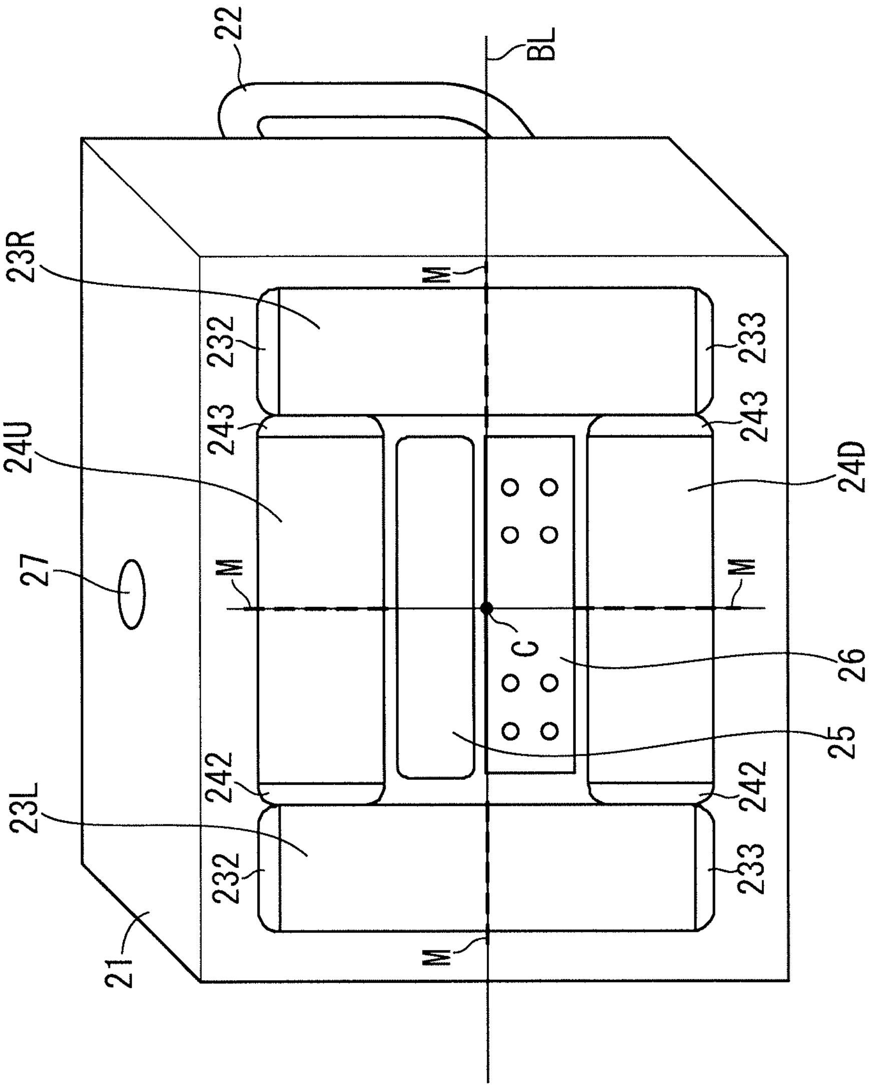
22
BL
23R
M
232
233
243
24U
24D
27
M
M
C
26
25
242
23L
232
233
242
21
M

FIG. 10

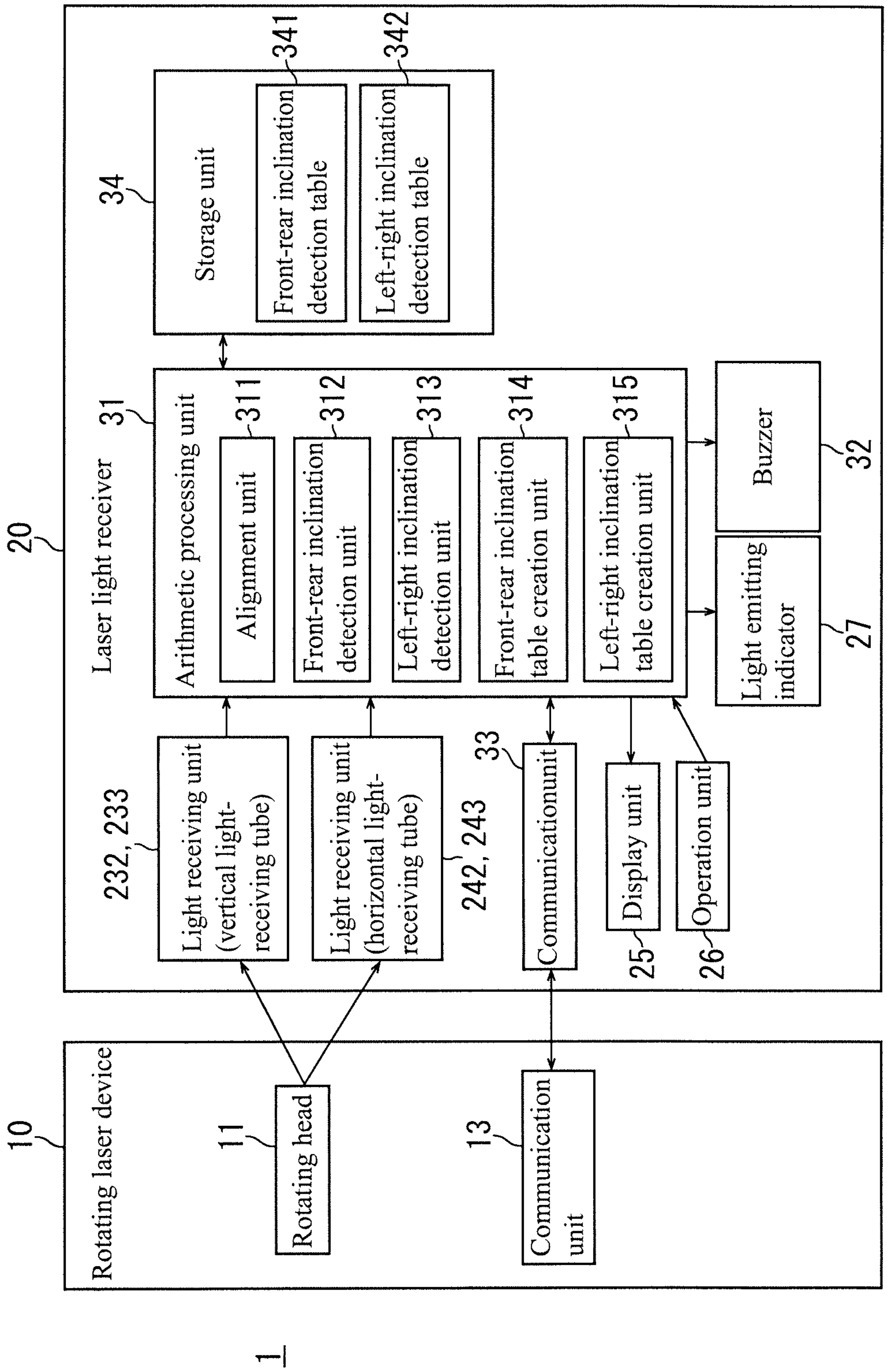
1
10
Rotating laser device
11
Rotating head
13
Communication unit
20
Laser light receiver
232, 233
Light receiving unit (vertical light-receiving tube)
242, 243
Light receiving unit (horizontal light-receiving tube)
33
Communicationunit
25
Display unit
26
Operation unit
31
Arithmetic processing unit
311
Alignment unit
312
Front-rear inclination detection unit
313
Left-right inclination detection unit
314
Front-rear inclination table creation unit
315
Left-right inclination table creation unit
27
Light emitting indicator
32
Buzzer
34
Storage unit
341
Front-rear inclination detection table
342
Left-right inclination detection table

FIG. 11

341

| Difference distance Dv [mm] | Inclination θ [°] |
|---|---|
| +13. 5 | 15 |
| ⋮ | ⋮ |
| +1. 0 | 1. 3 |
| +0. 5 | 0. 8 |
| 0 | 0 |
| −0. 5 | 0. 8 |
| −1. 0 | 1. 3 |
| ⋮ | ⋮ |
| −13. 5 | 15 |

342

| Difference distance Dh [mm] | Inclination δ [°] |
|---|---|
| +13. 5 | 12 |
| ⋮ | ⋮ |
| +1. 0 | 1. 1 |
| +0. 5 | 0. 6 |
| 0 | 0 |
| −0. 5 | 0. 6 |
| −1. 0 | 1. 1 |
| ⋮ | ⋮ |
| −13. 5 | 12 |

FIG. 12

## INTERNATIONAL SEARCH REPORT

International application No.
**PCT/JP2023/035367**

**A. CLASSIFICATION OF SUBJECT MATTER**

***G01C 9/06***(2006.01)i; ***G01C 15/00***(2006.01)i
FI: G01C9/06 A; G01C15/00 103C

According to International Patent Classification (IPC) or to both national classification and IPC

**B. FIELDS SEARCHED**

Minimum documentation searched (classification system followed by classification symbols)

G01C9/00-9/36; G01C15/00-15/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 6292258 B1 (SPECTRA PRECISION, INC.) 18 September 2001 (2001-09-18) entire text | 1-8 |
| A | WO 2013/135897 A1 (LEICA GEOSYSTEMS AG) 19 September 2013 (2013-09-19) entire text | 1-8 |
| A | EP 3404361 A1 (LEICA GEOSYSTEMS AG) 21 November 2018 (2018-11-21) entire text | 1-8 |
| A | JP 2004-505263 A (ESSLING, Mirko) 19 February 2004 (2004-02-19) entire text | 1-8 |
| A | JP 2001-255143 A (AMMANN LASERTECHNIK AG) 21 September 2001 (2001-09-21) entire text | 1-8 |
| A | WO 2012/059276 A1 (ROBERT BOSCH GMBH) 10 May 2012 (2012-05-10) entire text | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/035367**

| Patent document cited in search report | Publication date (day/month/year) | Patent family member(s) | Publication date (day/month/year) |
|---|---|---|---|
| US 6292258 B1 | 18 September 2001 | (Family: none) | |
| WO 2013/135897 A1 | 19 September 2013 | US 2015/0092183 A1<br>EP 2639548 A1<br>CN 104169681 A | |
| EP 3404361 A1 | 21 November 2018 | US 2018/0335305 A1<br>CN 108955655 A | |
| JP 2004-505263 A | 19 February 2004 | WO 2002/010681 A1<br>US 2003/0174305 A1<br>US 2007/0024845 A1<br>EP 2299240 A2<br>DE 10059240 A1 | |
| JP 2001-255143 A | 21 September 2001 | US 2001/0004287 A1<br>DE 10054327 A1<br>CH 694705 A5 | |
| WO 2012/059276 A1 | 10 May 2012 | DE 102010043359 A1<br>CN 103201589 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020169921 A